(19) Europäisches Patentamt
European Patent Office
Office européen des brevets

(11) EP 0 772 366 B1

(12) EUROPEAN PATENT SPECIFICATION

(45) Date of publication and mention of the grant of the patent:
**10.12.2003 Bulletin 2003/50**

(51) Int Cl.⁷: **H04N 9/804**, G11B 20/10

(21) Application number: **96307867.0**

(22) Date of filing: **30.10.1996**

(54) **A digital recording/reproducing apparatus**

Digitales Aufzeichnungs-/Wiedergabegerät

Appareil d'enregistrement/de reproduction numérique

(84) Designated Contracting States:
**DE GB**

(30) Priority: **31.10.1995 JP 28352395**

(43) Date of publication of application:
**07.05.1997 Bulletin 1997/19**

(73) Proprietor: **SHARP KABUSHIKI KAISHA**
**Osaka-shi, Osaka-fu 545-0013 (JP)**

(72) Inventors:
- **Kawaguchi, Koichi**
  **Chiba-shi, Chiba (JP)**
- **Katayama, Hironobu**
  **Noda-shi, Chiba (JP)**
- **Aoki, Kazuya**
  **Chiba-shi (JP)**

(74) Representative: **Brown, Kenneth Richard et al**
**R.G.C. Jenkins & Co.**
**26 Caxton Street**
**London SW1H 0RJ (GB)**

(56) References cited:
**EP-A- 0 601 963**
**EP-A- 0 606 857**
**EP-A- 0 625 860**
**EP-A- 0 665 689**
**EP-A- 0 673 157**

- **DATABASE WPI Section EI, Week 9649 Derwent Publications Ltd., London, GB; Class W04, AN 96-491873 XP002039324 & JP 08 251 539 A (KINSEISHA) , 27 September 1996**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 772 366 B1

## Description

BACKGROUND OF THE INVENTION

(1) Field of the Invention

The present invention relates to a digital recording/reproducing apparatus which is used to record and reproduce a digital signal such as a digital video signal, digital audio signal, digital data, etc., which has been compressed by high-efficiency coding, onto an existing digital video cassette recorder.

(2) Description of the Prior Art

In recent years, as digital signal processing technology has improved, in the field of the video cassette recorder for broadcasting stations or business use, the D1, D2, D3 and D5 systems (all of them are approved in the SMPTE standards), based on which the apparatus records and reproduces the signal used in the current television system, in the form of a digital signal, have been already standardized and put onto the market. At the HD digital VCR conference held last year, the digital video cassette recorder for general consumers (to be referred to as SD-VCR) was standardized.

For the next-generation television system of several kinds of high-definition television signal standards have been developed and improved for practical use.

When the high-definition television signal, which has a greater amount of information than that required for the current television system, is recorded and reproduced in the form of a digital signal, a dedicated digital video cassette recorder (to be referred to hereinbelow as D-VCR) becomes needed.

For this purpose, several systems have been proposed for recording and reproducing the high-definition television signal onto existing D-VCR in conformity with the current television system by compressing the amount of information by high-efficiency coding.

For example, in the video signal processing apparatus disclosed in Japanese Patent Application Laid-Open Hei 6 No. 46,369, the high-definition television signal is high-efficiency-coded (discreet cosine transform and differential pulse modulation) to conform to existing D-VCR so that the thus processed signal can be recorded and reproduced on existing D-VCR of D1, D2 and D3 formats.

The conventional example of this publication will be described with reference to Fig.1.

First, in Fig.1, reference numerals designate the following components: 900 a Y-input terminal for inputting the luminance signal (Y-signal) of the high-definition television signal; 901 a Pr-input terminal for inputting a chrominance signal (Pr-signal) of the high-definition television signal; and 902 a Pb input terminal for inputting another chrominance signal (Pb-signal) of the high-definition television signal. Further, 903 designates an A/D (analog-to-digital) converter for the Y-signal, 904 an A/D converter for the Pr-signal, and 905 an A/D converter for the Pb-signal, and convert the analog signals Y, Pr and Pb into their corresponding digital signals, respectively. Further, 906 designates an image compressing circuit for data compression; 907 a rearranging circuit for randomizing data; and 908 a D2-VTR of D2 format.

A reference numeral 909 designates an inverse rearranging circuit for recovering the data randomized at the time of recording back to the original; 910 an image decoding circuit for decompressing the signal which was image compressed at the time of recording; 911 a D/A (digital-to-analog) converter for converting the digital Y-signal into its analog form; 912 a D/A converter for converting the digital Pr-signal into its analog form; 913 a D/A converter for converting the digital Pb-signal into its analog form; 914 is an output terminal for the Y-signal of the high-definition television signal; 915 an output terminal for the Pr-signal of the high-definition television signal; and 916 an output terminal for the Pb-signal of the high-definition television signal.

Thus, the conventional apparatus, which is provided with the above components, reduces the amount of information of the high-definition television signal to the almost equivalent level of the amount of the current television signal by the high-efficiency coding, enabling recording and reproduction on existing D-VCR.

In the magnetic recording and reproducing apparatus disclosed in Japanese Patent Application Laid-Open Hei 5 No. 276,480 and in the image recording apparatus disclosed in Japanese Patent Application Laid-Open Hei 6 No. 292,129, the image data coded only within the frame or within the field, is extracted from the bit stream which is high-efficiency coded, and then the extracted data is inserted into track positions which the head retraces during the special playback mode. In this way, if the high-efficiency coded bit stream is inputted, it is possible to obtain a reproduction of the image during the special playback.

In a case, for example, where recording and reproduction in existing D-VCR is performed using the transport stream input of the MPEG (Moving Picture Experts Group), one of the international standards for high-efficiency coding, and a special playback function is effected, it is necessary to improve the quality of image in the special playback mode.

At present, as for D-VCR to record the ATV (Advanced Television) system for the next-generation television in the US, the ATV working group at the HD digital VCR conference which aims at standardizing the international standard for next-generation home-use digital video cassette recorders, has been discussing and deliberating on the standards proposed by the companies concerned.

However, when the high-efficiency coded bit stream is recorded and reproduced using a SD-VCR, and a special playback function is practiced, the following problem will occur: that is, the recording area for normal playback should be reserved from the limited recording area of SD-VCR, and error correction ability needs to be enhanced by further adding error correction coding beyond that of existing D-VCR because an error arises, the error might propagate or degrade the image due to the fact that the ratio of image compression has been increased, by means of a predictive coding, taking advantage of the fact that correlation between images across time is high in the case of a high-efficiency coded bit stream being used.

Only the remaining area, or area which is obtained by taking out the above image area for normal playback and the area assigned for the enhanced error correcting coding from the limited recording area of D-VCR, is used for the special playback area. As a result, it is impossible to secure a recording area large enough.

When special playback is performed under such conditions, the image data which has been coded for each field or each frame can be extracted from the input bit stream, and then the frame of image can be constructed using the DC coefficients of DCT of the extracted image data in order to reduce the amount of data. In this case, however, degradation of resolution or block distortion attributed to DCT occurs, thus markedly reducing the quality of the image for special playback.

European patent application EP-A-0 673 157 discloses a digital tape recording and reproducing apparatus as defined in the preamble of claim 1 in which the respective proportions of normal play-back data, high-speed play-back data and very high-speed play-back data to be recorded may be varied.

## SUMMARY OF THE INVENTION

In order to solve the above problems, it is an object of the present invention to provide a digital recording and reproducing apparatus.

In accordance with the present invention, there is provided a digital recording and reproducing apparatus including a recording system which has a special playback data generating circuit arranged to produce from a high-efficiency coded bit stream inputted from an input terminal at least two kinds of low-bit-rate bit stream for special playback and means for causing the produced data to be recorded in an allotted manner; and a reproducing system including means for reproducing and decoding the at least two kinds of low-bit-rate bit streams which were generated during recording, whereby at least two kinds of special playback speeds can be selected; characterised by a priority choosing circuit for determining an allotting ratio of a predetermined code amount between two kinds of low-bit-rate bit streams, and a control circuit for outputting a control signal to the priority choosing circuit so as to control said allotting ratio.

In accordance with a first embodiment of the invention, a digital recording and reproducing apparatus includes: a video image input terminal; an analog-to-digital converter; an image coder; a variable-length coder; an error correction coder; a digital converter; a recording amplifier; a reproducing amplifier; an equalizer; a digital demodulator; an error correction demodulator; a variable-length decoder; an image decoder; a digital-to-analog converter; and a video output terminal, and further comprises: a bit-stream input processing circuit provided on the recording system, which includes: a bit-stream input terminal for receiving a bit stream of a digital signal such as a high-definition television signal or the like, the bit stream having been high-efficiency coded based on a predetermined standard; a synchronism acquiring circuit for picking up a synchronizing signal portion from the input bit stream; an input interface circuit for converting the input bit stream into the signal having the recording rate of the digital recording and reproducing apparatus; a special-playback data generating circuit for producing at least two kinds of low-bit-rate bit streams for special playback, from the bit stream whose synchronizing signal is acquired in the synchronism acquiring circuit; and a multiple allotter for allotting the generated search data bit streams for special playback, to the data readout positions on a recording medium from which the data can be read out during special playback and multiply allocating the generated bit streams for special playback with the bit stream for normal playback, which enables the search data bit stream for normal playback to be recorded onto a normal-playback recording area on the recording medium and enables the bit streams for special playback to be recorded onto a special-playback recording area; and a bit-stream output processing circuit provided on the reproducing system, which includes: an output interface circuit for converting the bit stream for normal playback recorded on the normal-playback recording area on the recording medium, into the high-efficiency coded bit stream based on the predetermined standard; a special-playback data processing circuit for decoding the at least two kinds of search data bit streams generated during recording; a changeover circuit for performing changeover between the normal playback mode and the special playback mode; and a bit-stream output processing circuit having an output terminal for outputting the high-efficiency coded bit stream based on the predetermined standard, whereby the high-efficiency coded bit stream of the digital signal based on the predetermined standard can be recorded and reproduced and at least two kinds of special playback modes can be selectively operated.

In accordance with a second embodiment of the invention, a digital recording and reproducing apparatus according to the first embodiment is characterized in that the at least two kinds of low-bit-rate bit streams for special playback include two kinds of search data bit streams for low and high speeds, the special-playback data (search data) generating circuit in the recording system comprises: a priority choosing circuit for determining the allotting ratio of the code amount between the two search data bit streams for low and high speeds when the two kinds of bit streams are recorded on the special-playback recording area; a low-speed search data generating circuit for producing a low-bit-rate bit stream for low-speed search data from the bit stream whose synchronizing signal was picked up in the synchronism acquiring circuit; and a high-speed search data generating circuit for producing a low-bit-rate bit stream for high-speed search data from the bit stream whose synchronizing signal was picked up in the synchronism acquiring circuit, and the special-playback data (search data) processing circuit in the reproducing system comprises: a search-speed identifying circuit for detecting the search speed for the reproduced special-playback data and selecting either a low-speed search data decoding circuit or high-speed search data decoding circuit in accordance with the search speed so as to input the special-playback data to the selected circuit; a decoding circuit for low-speed search data, which restores the data recorded in the low-speed search data area of the special-playback recording area on the recording medium, back to its original low-bit stream during the low-speed mode; a decoding circuit for high-speed search data, which restores the data recorded in the high-speed search data area of the special-playback recording area, back to its original low-bit stream during the high-speed mode; and a selector circuit for selecting one of the outputs from the low-speed search data decoding circuit and the high-speed search data decoding circuit.

In accordance with a third embodiment of the invention, a digital recording and reproducing apparatus according to the first embodiment is characterized in that the bit-stream input processing circuit has a bit-stream input changing circuit for changing the bit rate of the inputted bit stream so as to enable the input to be processed therein.

In the first embodiment of the invention, when the compressed bit stream (for example, the transport stream for the MPEG) which is obtained by compressing the current television signal or the high-definition television signal (to be referred to hereinbelow as HDTV signal) into the high-efficiency coded form, is used as an interface for recording the signal onto an existing digital recording and reproducing apparatus, for example, an existing D-VCR (digital video cassette recorder), the normal playback recording area on the recording medium (e.g., a magnetic tape) is recorded with the input bit stream which is basically unchanged but just made to have undergone a simple signal processing, i.e., the transform of the recording rate. Further, an extra recording area for enhancing the error correction codes is usually reserved in the recording area, while the remaining area, that is, the total recording area reduced by the subtraction of the normal-playback area and the area for error correction codes, is allotted for the special-playback recording area. This special-playback recording area is recorded with a newly generated low-bit-rate signal. More specifically, the input bit stream is first decoded and this decoded data is used to produce the new low-bit-rate signal. This newly generated bit stream is recorded together with for example various kinds of header information, onto the special-playback recording area, separately. In this way, it becomes possible to also obtain a reproduction of images during special playback. Accordingly, it is possible to satisfy the functions of normal playback and special playback.

Further, since at least two kinds of low-bit-rate signals are allocated to the readout positions of data for the special playback mode in order to achieve at least two kinds of search speeds. For example, in the case of the magnetic recording tape, these signals are allotted to the positions the head retraces at respective search speeds.

In the digital recording and reproducing apparatus in the second embodiment, the area for low-speed search data and the area for high-speed search data are controlled mutually, wherein areas allotted as recording areas for each respective search speed are controlled. Therefore, it is possible to obtain optimal reproductions of the special-playback images in both the search modes.

Further, in the digital recording and reproducing apparatus in the second embodiment, in order to improve one of the special-playback image reproductions which are formed from the low-speed search area and the high-speed search area, both allotted in the special playback recording area, a desired one of the search data can be enhanced by the user's preference or other choice. Thus, it is possible to improve the quality of image at the selected search speed.

In the third embodiment, since it has a bit-stream input changing circuit, it is possible to effect normal recording and reproduction and special playback for a signal on a different bit stream.

BRIEF DESCRIPTION OF THE DRAWINGS

Fig.1 is a block diagram showing a conventional digital recording and reproducing apparatus;

Fig.2 is a block diagram showing the first embodiment of the digital recording and reproducing apparatus in accordance with the invention;

Fig.3 is a block diagram showing a bit stream input/output processing circuit;
Fig.4 is a block diagram showing a search data generating circuit;
Fig.5 is a block diagram showing a search data processing circuit;
Fig.6 is an illustrative configuration showing data sync blocks of the video sector of the SD-VCR;
Fig.7 is a configuration for illustrating the conversion of two transport streams into five sync blocks; and
Fig.8 is a configuration showing the relation between the area for normal playback and the area for special playback.

DESCRIPTION OF THE PREFERRED EMBODIMENTS

The embodiments of the invention will hereinafter be described with reference to the accompanying drawings.
In the beginning, the first embodiment of this invention will be discussed.
The first embodiment is configured overall as shown in Fig.2: Figs.3 through 5 show the specific configurations of it. First, the overall structure of the first embodiment will be described with reference to Fig.2 and then the detailed description will be made using the other figures.
In this embodiment, a case of recording and reproducing the MPEG 2 transport stream is shown as an example, but the present invention should not be limited to this. Other bit streams such as JPEG, other MPEGs, etc. which are high-efficiency codings, may be used as the interface.
In Fig.2, the recording system of the D-VCR will be described.
The recording system of the D-VCR shown in Fig.2, includes: a video input terminal 100 for inputting the current television signal; an A/D (analog-to-digital) converter 101(to be referred to hereinbelow as ADC) for converting an analog video input signal into its digital video signal; an image coder 102 for compressing the data of redundant portions using the fact that the input video signal has a high correlation with respect to time and space; a variable-length coder 103 for reducing the number of bits for the signal which is data compressed; an error correction coder 104 for correcting the coding error arising in the recording and reproducing system; a digital modulator 105 for producing an almost or completely d.c. free recording signal; and a recording amplifier 106 for equalizing the waveforms of the recording signal. Designated at 107 is a magnetic tape for recording.
Designated at 116 is an MPEG 2 transport-stream input terminal while 117 designates a bit-stream input processing circuit wherein the input MPEG2 transport stream is transformed into the format of existing D-VCR. These circuits 116 and 117 are the circuits which are newly added to the recording system of the invention, and will be explained later.
Next, the reproduction system of the D-VCR will be explained.
A reference numeral 108 designates a reproducing amplifier for amplifying the regenerative signal picked up from tape 107; 109 an equalizer for equalizing the waveforms of the regenerative signal; 110 a digital demodulator for restoring the signal which was digitally modulated during recording back to the original state, 111 an error correction decoder for correcting coding errors which have been generated in the recording/reproducing system; 112 a variable-length decoder for recovering the codes which have undergone the variable-length coding during recording back to the original state; 113 an image decoder for recovering the data compressed during recording back to the original state; 114 an digital-to-analog (D/A) converter (to be referred to hereinbelow as DAC) for converting the digital video signal into the analog video signal; and 115 a video output terminal for outputting the signal of the current television system.
A reference numeral 118 designates a bit-stream output processing circuit which converts the D-VCR format into the MPEG2 transport stream; and 119 an MPEG2 transport-stream output terminal which outputs the MPEG2 transport stream. These circuits 118 and 119 are newly added to in this invention, and will be detailed later.
Referring next to Fig.3, the added circuits in the embodiment of the invention will be described in detail. Here, the circuits described in Fig.2 are allotted like reference numerals, therefore only the specifications of bit-stream input processing circuit 117 and bit-stream output processing circuit 118 will be described.
First, the feature of bit-stream input processing circuit 117 in the recording system will be described.
In Fig.3, reference numerals designate the following components:- 200 a synchronism acquiring circuit for detecting a synchronizing signal portion from the MPEG2 transport stream; 201 an input interface circuit for converting the input bit stream into the signal having the recording rate of D-VCR; 202 a search-data generating circuit for producing the bit stream of low-bit rate for search, which allows the D-VCR to perform a special playback function; 203 an extra-data generating circuit for producing a header for input bit stream and various kinds of flags to be used for controlling the special playback operation; 204 a servo-syscon system which receives a synchronizing signal from synchronism acquiring circuit 200 to control the tape and head system and also controls the signals from the control panel. In this configuration, the output from extra-data generating circuit 203 is inputted to error correction coder 104 of existing D-VCR. The signal from coder 104 is further outputted to digital modulator 105 where it undergoes the same process as effected in existing D-VCR and then recorded onto the tape.
In the bit-stream input processing circuit 117 thus configured, the MPEG2 transport stream is inputted and processed to be converted into the format of existing D-VCR.

Next, the feature of bit-stream output processing circuit 118 will be described.

In reproduction, the regenerative video signal after waveform equalization is supplied from equalizer 109 to digital demodulator 110. Then the signal undergoes the same predetermined process in error correction demodulator 111, as it is effected in existing D-VCR. The processed signal is then inputted to bit-stream output processing circuit 118.

In bit-stream output processing circuit 118, designated at 205 is an error correcting circuit, which performs error correction of the data which could not be corrected in error correction decoder 111, using features such as for example the high correlation of images, etc. This component may not be necessarily added if the aforementioned error correction decoder has a high performance or if the coding error is assumed to be small.

The other components are designated as follows:- 206 an extra-data processing circuit which decodes the extra data which was prepared and added during recording and includes the header of the input bit stream and the various flags to be used for controlling the special playback operation; 207 an output interface circuit which converts the existing D-VCR format into the MPEG2 transport stream; 208 a search data processing circuit which decodes the search data produced during recording for the special playback mode; and 209 a changeover circuit which performs changeover between the normal playback mode and the special playback mode. Thus, bit-stream output processing circuit 118 of the reproducing system is configured.

As the output from the result of the process in bit-stream processing circuit 118, an output bit stream is obtained from MPEG2 transport-stream output terminal 119.

In Fig.3, designated at 210 is a bit-stream input changeover circuit which permits the processing of different bit-stream inputs, and the feature and operation will be detailed in the description of the second embodiment.

Next, referring to Figs.4 and 5, the description of search-data generating circuit 202 and search-data processing circuit 208 will be made.

First, referring to Fig.4, search-data generating circuit 202 will be described. (This corresponds to the first and second features of the invention.)

Designated at 300 in Fig.4 is a low-speed search data generating circuit for producing the data signal for low-speed search from the bit stream or transport stream whose synchronizing signal is picked up in synchronism acquiring circuit 200.

In this low-speed search data generating circuit 300, the normal process in the MPEG2 decoder is used in part. This can be performed by for example storing the headers of different kinds of layers of MPEG2 into an additional memory and further storing the encoded data for only I-pictures which is coded within the field or frame, into the memory.

If the memory has enough capacity, the data for P-pictures may be added.

When the memory does not have enough capacity, the data can be made up of, for example, only d.c. coefficients of DCT blocks added with end-of-block codes. In this case, since degradation of resolution or block distortion occurs, it is preferable to produce a bit stream which further has some a.c. coefficients with end-of-block codes for the central part of the frame of image where degradation of image is likely to visually stand out.

A reference numeral 301 designates a high-speed search data generating circuit. This circuit produces the data signal for high-speed search from the bit stream or transport stream whose synchronizing signal picked up in synchronism acquiring circuit 200, in the same manner as in the low-speed search data generating circuit.

In this high-speed search data generating circuit 301, as is in the aforementioned low-speed search data generating circuit 300, the normal process in the MPEG2 decoder is used in part. This can be performed by for example storing the headers of different kinds of layers of MPEG2 into an additional memory and further storing the encoded data for only I-pictures which is coded within the field or frame, into the memory.

If the memory has enough capacity, the data for P-pictures may be added.

When the memory does not have enough capacity, the data can be made up of, for example, only d.c. coefficients of DCT blocks added with end-of-block codes. In this case, since degradation of resolution or block distortion occurs, it is preferable to produce a bit stream which further has some a.c. coefficients with end-of-block codes for the central part of the frame of image where degradation of image is likely to visually stand out. The reason the data generation is performed in the separate circuits for low-speed search data and for high-speed search data, as described above, is that the number of pictures to be produced differs between the low-speed and high-speed modes. In general, as for the search data for high-speed, a frame of image needs to be recorded across many tracks, therefore the number of pictures able to be recorded tends to become less. For this reason, two circuits are provided, but it is possible to device a configuration using a common processing circuit depending upon the circuit design.

A reference numeral 303 designates a priority choosing circuit which determines the allotting ratio of the amount of the codes for low speed to that for high speed under control of servo-syscon system 204 and imparts the option of dividing the total amount of codes into two sections for equal search data or dividing it into two unequal sections. (This corresponds to the second feature of the invention.)

A reference numeral 302 designates a multiple allotter which assigns the outputs from low-speed search data generating circuit 300 and high-speed search data generating circuit 301 onto the tape pattern so as to multiply allocate these data with the bit stream for normal playback. The output from the multiple allotter is inputted to interface circuit 201.

Thus, search data generating circuit 202 is configured.

Referring next to Fig.5, search data processing circuit 208 will be explained.

In the figure, 400 designates a search-speed identifying circuit which, when the special playback mode is activated, inputs the bit stream from extra-data processing circuit 206 and detects the search speed based on the control signal from servo-syscon system 204. As the result of the detection, the circuit 400 selects either decoding circuit for low-speed search data 401 or decoding circuit for high-speed search data 402.

A reference numeral 401 designates the decoding circuit for low-speed search data, which restores the data recorded in the low-speed search data area back to its original low-bit stream during the low-speed mode.

A reference numeral 402 designates the decoding circuit for high-speed search data, which restores the data recorded in the high-speed search data area back to its original low-bit stream during the high-speed mode.

Here, low-speed search data decoding circuit 401 and high-speed search data decoding circuit 402 may be integrated as a common circuit.

A reference numeral 403 is a selector circuit which selects one of the outputs from low-speed search data decoding circuit 401 and high-speed search data decoding circuit 402, in accordance with the search speed which is detected based on the control signal from servo-syscon system 204.

When low-speed search data decoding circuit 401 and high-speed search data decoding circuit 402 are integrated into the common structure, this selector circuit 403 is no more needed.

The output from selector circuit 403 is outputted to changeover circuit 209 whereby the bit stream for the special playback mode is obtained.

Next, referring to Fig.6, the configuration of data sync blocks in the video sector of the SD-VCR will be described.

In the SD-VCR, the video signal is composed of sync blocks as shown in Fig.6. The area for video data is allotted to sync blocks numbered with 21 through 155: the area for video auxiliary data is defined at sync blocks numbered with 19, 20 and 156.

Sync area, ID code and ECCl (error correcting internal-code) are assigned for each sync block. ECC2 (error correcting external code) is allotted to sync blocks numbered with 157 to 167.

One sync block is composed of in total 90 bytes: 2 bytes of the sync area, 3 bytes of the ID code, 77 bytes of the video auxiliary data area or video data area and 8 bytes of ECC1.

In the embodiment of the invention, since the bit stream which is image compressed by high-efficiency coding is adopted as a recording signal, an extra error correcting code, ECC3 is allotted to 10 sync blocks numbered with 21 through 30 in the video data area. This can be used as an option or need not be used.

Referring next to Fig.7, a technique for converting the transport stream of MPEG2 into sync blocks of SD-VCR will be described.

First, two packets of the transport stream is converted into five sync blocks of SD-VCR, and completed with the five sync blocks.

In detail, as shown in Fig.7, a synchronizing signal of 1 byte is allotted in common to each sync block. This is used to record an identifier for identification of either the data for normal playback or for special playback, or a value which periodically varies from 0 to 4 for five sync blocks so that the sync block number can be identified by detecting this value at the time of reproduction. Further, 3 bytes are provided for a header which is to be added to each packet of the transport stream so that a time stamp for the transport stream or a header to other transport stream packets will be recorded.

The transport stream of MPEG2 is defined so that one packet consisting of 188 bytes forms a unit. In practice, each transport stream packet has a sync byte of 1 byte, two packets of the remaining data each consisting of 187 bytes (except the sync byte) are recorded.

Specifically, the video sector has 77 bytes of the recording area for each sync block and there are five sync blocks, so that there are 385 bytes for the recording area as follows:

$$77 \text{ (bytes) X } 5 \text{ (sync block)} = 385 \text{ (bytes)}.$$

Of these, five bytes are used for the common synchronizing signal to each sync block. Therefore, the remaining bytes for the recording area are:

$$385 \text{ (bytes)} - 5 \text{ (bytes)} = 380 \text{ (bytes)}.$$

Further, since a header of three bytes is added to each transport stream packet, 380 bytes can be used for recording:-

$$380 \text{ (bytes)} - (3 \text{ (bytes)} \times 2) = 374 \text{ (bytes)}.$$

For this area, two packets of the transport stream each consisting of 187 bytes (except the sync byte) is recorded, so that

$$374 \text{ (bytes)} - (187 \text{ (bytes)} \times 2) = 0 \text{ (bytes)}.$$

Thus, the bit stream is converted into the above allotment, whereby it becomes possible to record two packets of the transport stream onto five sync blocks.

Referring next to Fig.8, the normal playback area and special playback area will be explained.

SD-VCR supports two formats, i.e., 525/60 system for recording the NTSC signal (horizontal scan line number : 525 lines, field frequency : 60 Hz) and 625/50 system for recording the PAL signal (horizontal scan line number : 625 lines, field frequency : 50 Hz).

Of these, in this embodiment, description will be made of the case where the ATV signal for the next-generation television system in the US is recorded.

In the D-VCR for ATV (to be referred to hereinbelow as ATV-VCR), it is assumed that the tape format for 525/60 system is used.

In SD-VCR, the ATF method is adopted for its capstan-servo mechanism. This ATF mechanism uses pilot frequencies f0, f1, f0, f2 which are periodically repeated across the tracks and effects the phase control of the capstan-servomechanism during playback using this signal.

The ATV-WG at the HD digital VCR conference proposed that in ATV-VCR, the positions of the normal playback area and the special playback area are determined as shown in Fig.8, by making use of the periodic feature of this ATF signal.

Following this proposal, allocation of the normal playback area and the special playback area in this embodiment will also be described using Fig.8, in accordance with the tape format proposed.

First, the high-speed search data is to be recorded into five sections at most of six sections of sync blocks of 40 to 44, 62 to 66, 84 to 88, 106 to 110, 128 to 132 and 150 to 154, on the f0-track.

On the fl-track, the low-speed search data is to be recorded in a section consisting of n x 5 (n = 0 to 6) adjoining blocks within the range of the sync blocks numbered with 37 to 66.

When the search data areas are allotted as in the positions described above, 4x-fast forward operation and 2x-fast rewind operation can be performed for the low-speed mode while, 18x-fast forward operation and 16x-fast rewind operation can be attained for the high-speed mode. Further, it is also possible to effect the variable search speed operation within the range of ±1.5x to 8.5x-speed by the step of the unit speed.

For example, as stated above, if the bit stream of the ATV system is the signal to be recorded and reproduced, the bit rate of this signal is defined to be about 19.39 Mbps.

This will be recorded on SD-VCR. Suppose that the recording area for normal playback has 107.5 sync blocks (to be referred to hereinbelow as SBs) per track. Since 300 tracks are formed for 1 sec. in SD-VCR,

$$107.5 \text{ (SBs)} \times 300 \text{ (tracks/sec)} = 32{,}250 \text{ (SBs)}.$$

Since two packets of the transport stream (to be referred to hereinbelow as TS) are allotted to 5 SBs, then

$$32{,}250 \text{ (SBs)} / 5 = 6{,}450.$$

Accordingly, the recording capacity for normal playback becomes as follows:

$$6{,}450 \times 2 \text{ (TSs)} \times 188 \text{ (bytes)} \times 8 \text{(bits)}$$

$$= 19.4016 \text{ Mbps}.$$

As a result, the ATV bit stream of about 19.39 Mbps can be recorded and reproduced on 107.5 SBs per track.

In the above, if some area exceeds what is needed, dummy data may and should be inserted.

In consideration of what has been discussed above, the area for special playback will be optimized.

In the following calculation, the recording area will be defined for each 4 tracks.

First, the recording capacity for video data per track in SD-VCR is 135 SBs. Of these, 10 SBs are used for ECC3 as an option and the remaining part is as follows:

$$135 \text{ (SBs)} - 10 \text{ (SBs)} = 125 \text{ (SBs)}.$$

These sync blocks are allotted on four tracks, so that

$$125 \text{ (SBs)} \times 4 \text{ (tracks)} = 500 \text{ (SBs)}.$$

Of these, 107.5 SBs per track are used for the normal playback area. If the rest is allotted for the special playback area, the part will be calculated as follows:

$$500 \text{ (SBs)} - \{107.5 \text{ (SBs)} \times 4 \text{ (tracks)}\} = 70 \text{ (SBs)}.$$

Accordingly, 70 SBs per four tracks can be used for the special playback area. As for the high-speed data, the amount of the data which is effective is reduced to half since the high-speed data is repeatedly recorded.

Table 1 below shows examples A to C of the allocation of the low-speed search data area and the high-speed search data area.

Table 1

| | Search data area 70(SBs)/4 tracks | Normal playback area (SBs) | | | |
|---|---|---|---|---|---|
| | | f0 | f1 | f0 | f2 |
| A | L 40SB (f1)<br>H 15SB*2(f0) | 110 | 85 | 110 | 125 |
| B | L 30SB (f1)<br>H 20SB*2(f0) | 105 | 95 | 105 | 125 |
| C | L 20SB (f1)<br>H 25SB*2(f0) | 100 | 105 | 100 | 125 |

L: low-speed search data area
H: High-speed search data area
f0, f1: Pilot frequencies

Of these, example B is the case where the special playback area is equally divided into two parts for low-speed and for high-speed.

Example A is the case of the allocation in which the quality of the image at the time of the low-speed mode is enhanced: example C is the case of the allocation in which the quality of the image at the time of the high-speed mode is enhanced.

In the case of example C, the image in the low-speed mode is degraded while the quality of the image in the high-speed mode is improved in compensation. Therefore, if 4x-search speed in the low-speed mode is compensated by 3.5x or 4.5x-speed in the high-speed mode, this option will produce effective result.

Although the examples shown in Table 1 was defined for the case where the special playback area is 70 SBs per 4 tracks, it is not necessary that the way of the allocation should agree with the values in these examples in Table 1 as long as it falls within this range.

Next, description will be made of the case where a different bit stream is inputted in the second embodiment. In this case, the basic configuration is the same as in the first embodiment described above, therefore only the difference will be explained.

The difference is that bit-stream input changeover circuit 210 is provided in the block diagram shown in Fig.3.

This bit-stream input changeover circuit 210 is the circuit for changing the bit rate of the inputted bit stream so as to enable the input with a different bit rate to some degree to be recorded and reproduced and the special playback of it can be performed. This can be attained by outputting a sampling signal (to be called 'clock signal') for the corresponding bit stream.

This clock signal is produced as follows: a voltage control quartz oscillator having a frequency of the L.C.M. of all the bit rates of the input bit streams which are supposed to be supported is provided; and the output from this oscillator is frequency divided to produce a clock signal corresponding to the desired bit rate.

Although in the above description, the case where the ATV transport bit stream of 19.39 Mbps was explained, the case where, for example, the input of a bit stream having a bit rate up to 19.6272 Mbps is permitted will be explained. In this case, the basic configuration is the same as in the first embodiment described before, therefore only the difference in configuration between the normal playback area and the special playback area will be explained.

The input which is a signal of 19.6272 Mbps is recorded on SD-VCR. Suppose that 108.75 sync blocks per track are allotted as the recording area for normal playback. Since 300 tracks are formed for 1 sec. in SD-VCR,

108.75 (SBs) x 300 (tracks/sec) = 32,625 (SBs).

Since two packets of the transport stream (to be referred to hereinbelow as TS) are allotted to 5 SBs, then

32,625 (SBs) / 5 = 6,525.

Accordingly, the recording capacity for normal playback becomes as follows:

6,625 x 2 (Ss) x 188 (bytes) x 8(bits)

= 19.6272 Mbps.

As a result, the bit stream of about 19.6272 Mbps can be recorded and reproduced on 108.75 SBs per track.

In the above, if a bit rate less than the above is inputted, dummy data may be inserted in exceeded area.

In consideration of what has been discussed above, the area for special playback will be optimized.

Similarly to the above, the recording area will be defined for each 4 tracks in the following calculation:-

First, the recording capacity per track is 135 SBs as in the above. Since of these, 10 SBs are used for ECC3, the remaining part is as follows:

135 (SBs) - 10 (SBs) = 125 (SBs).

These sync blocks are allotted on four tracks, so that

125 (SBs) x 4 (tracks) = 500 (SBs).

Of these, 108.75 SBs per track are used for the normal playback area. If the rest is allotted for the special playback area, the part will be calculated as follows:

500 (SBs) - {108.75 (SBs) x 4 (tracks)} = 65 (SBs).

Accordingly, 65 SBs per four tracks can be used for the special playback area, similarly to the above. As for the high-speed data, the amount of the data which is effective is reduced to half since the high-speed data is repeatedly recorded.

Table 2 below shows examples A to C of the allocation of the low-speed search data area and the high-speed search data area.

Table 2

| | Search data area 65(SBs)/4 tracks | Normal playback area (SBs) | | | |
|---|---|---|---|---|---|
| | | f0 | f1 | f0 | f2 |
| A | L 35SB (f1)<br>H 15SB*2(f0) | 110 | 90 | 110 | 125 |
| B | L 25SB (f1)<br>H 20SB*2(f0) | 105 | 100 | 105 | 125 |
| C | L 15SB (f1)<br>H 25SB*2(f0) | 100 | 110 | 100 | 125 |
| L: low-speed search data area<br>H: High-speed search data area<br>f0, f1: Pilot frequencies | | | | | |

Of these, example B is the case where the special playback area is equally divided into two parts for low-speed and for high-speed.

Example A is the case of the allocation in which the quality of the image at the time of the low-speed mode is enhanced: example C is the case of the allocation in which the quality of the image at the time of the high-speed mode is enhanced.

In the case of example C, the image in the low-speed mode is degraded while the quality of the image in the high-speed mode is improved in compensation. Therefore, if 4x-search speed in the low-speed mode is compensated by 3.5x or 4.5x-speed in the high-speed mode, this option will produce effective result.

Although the examples shown in Table 2 was defined for the case where the special playback area is 65 SBs per 4 tracks, it is not necessary that the way of the allocation should agree with the values in these examples in Table 2 as long as it falls within this range.

In the second embodiment, the case where 5 SBs per track are increased as compared to that in the first embodiment was described. However, this is a mere example, and it is possible to freely increase or decrease the number of the sync blocks beyond the range that is specified by this second embodiment, as long as the condition of 5 SBs per track is satisfied.

In the digital recording and reproducing apparatus having the first feature, it is possible to record and reproduce the MPEG2 transport stream using existing D-VCR by adding a few circuits. That is, a mere addition of simple signal processing circuit will be able to realize the recording/reproduction without developing a new dedicated D-VCR. Further, it is possible to obtain a reproduction of the image in the special playback mode by, for example, processing the MPEG2 transport stream into a low-bit-rate bit stream and arranging it to the positions which the head retraces during playback.

In addition, by producing at least two kinds of search data for low speed and for high speed, it becomes possible to select at least two kinds of search speeds.

In the digital recording and reproducing apparatus having the second feature, the area for low-speed search data and the area for high-speed search data are optimally divided and distributed. Therefore it is possible to obtain an optimal reproduction of the special-playback image for each search mode. Alternatively, when one of the search data area for low speed or for high speed is increased, the reproduction of the image in the area-increased mode becomes improved. Accordingly, it becomes possible to select the quality of the image during special playback.

In the digital recording and reproducing apparatus having the third feature, it is possible to record and reproduce a signal on a different bit stream.

In the digital recording and reproducing apparatus having the fourth feature, it is possible to record and reproduce a signal on a different bit stream and it is also possible to perform a function of special playback.

In the digital recording and reproducing apparatus having the fifth feature, it is possible to obtain an optimal reproduction of the image during special playback in both the low-speed and high-speed modes. It is also possible to obtain a much optimal reproduction of the image during special playback in one of the selected modes, either the low-speed or high-speed mode.

As has been described heretofore, in accordance with the invention, it is possible to record and reproduce the MPEG2 transport stream using existing D-VCR. Further, it becomes possible to obtain a reproduction of the image in the special playback mode by processing an input bit stream into a low-bit-rate bit stream and arranging it to the positions which the head retraces during playback. Further, the provision of a priority choosing circuit enables optimal allocation of the two special playback areas. Accordingly, it is possible to make a choice: the quality of the special playback image is made optimal in both modes or the quality of the special playback image in one of the two modes is improved.

Further, the provision of a bit-stream input changeover circuit enables recording/reproduction and/or special playback of different bit streams, thus offering a very useful practical effect.

## Claims

1. A digital recording and reproducing apparatus including a recording system which has a special playback data generating circuit (202) arranged to produce from a high-efficiency coded bit stream inputted into an input terminal (116) a bit stream for normal playback and at least two kinds of low-bit-rate search data bit stream for special playback and means for causing the produced data to be recorded in a multiply allotted manner; and a reproducing system including means for reproducing and decoding the bit stream for normal playback and the at least two kinds of low-bit-rate search data bit streams which were generated during recording, whereby at least two kinds of special playback speeds can be selected; **characterised in that** the recording system includes a priority choosing circuit (303) for determining an allotting ratio of a predetermined code amount between the at least two kinds of low-bit-rate search data bit streams, and a control circuit (204) for outputting a control signal to the priority choosing circuit (303) so as to control said allotting ratio.

2. Apparatus according to claim 1, wherein the allotting ratio is controllable so as to equally divide a recording area between the low bit-rate search data bit streams.

3. A digital recording and reproducing apparatus according to any preceding claim, in which the recording system includes: a video image input terminal (100); an analog-to-digital converter (101); an image coder (102); a variable-length coder (103); an error correction coder (104); a digital modulator (105); a recording amplifier (106); a reproducing amplifier (108); an equalizer (109); a digital demodulator (110); an error correction decoder (111); a variable-length decoder (112); an image decoder (113); a digital-to-analog converter (114); and a video output terminal (115), and further includes:

    a bit-stream input processing circuit (117) for receiving said high-efficiency coded bit stream of a digital signal such as a high-definition television signal or the like, said bit stream having been high-efficiency coded based on a predetermined standard; a synchronism acquiring circuit (200) for picking up a synchronizing signal portion from the input bit stream (200); an input interface circuit (201) for converting the input bit stream into a signal having the recording rate of the digital recording and reproducing apparatus; and a multiple allotter (302) for allotting the generated search data bit streams for special playback, to the data readout positions on a recording medium (107) from which the data can be read out during special playback and multiply allocating the generated search data bit streams for special playback with the bit stream for normal playback, which enables the bit stream for normal playback to be recorded onto a normal-playback recording area on the recording medium and enables the search data bit streams for special playback to be recorded onto a special-playback recording area; and in which the reproducing system includes:

        a bit-stream output processing circuit (118) provided on the reproducing system, which includes: an output interface circuit (207) for converting the bit stream for normal playback recorded on the normal-playback recording area on the recording medium, into the high-efficiency coded bit stream based on the predetermined standard; a special-playback data processing circuit (208) for decoding the at least two kinds of search data bit streams generated during recording; a changeover circuit (209) for performing changeover between the normal playback mode and the special playback mode; and an output terminal (119) for outputting the high-efficiency coded bit stream based on the predetermined standard, whereby the high-efficiency coded bit stream of the digital signal based on the predetermined standard can be recorded and reproduced and at least two kinds of special playback modes can be selectively operated.

4. A digital recording and reproducing apparatus according to claim 3, wherein the at least two kinds of low-bit-rate search data bit streams include two kinds of search data bit streams for low and high speeds, the special-playback data generating circuit (202) in the recording system includes said priority choosing circuit (303) for determining the allotting ratio of the code amount between the two search data bit streams for low and high speeds when the two kinds of bit streams are recorded on the special-playback recording area; a low-speed search data generating circuit (300) for producing a low-bit-rate bit stream for low-speed search data from the bit stream whose synchronizing signal was picked up in the synchronism acquiring circuit (200); and a high-speed search data generating circuit (301) for producing a low-bit-rate bit stream for high-speed search data from the bit stream whose synchronizing signal was picked up in the synchronism acquiring circuit (200), and the special-playback data processing circuit (208) in the reproducing system comprises: a search-speed identifying circuit (400) for detecting the search speed for the reproduced special-playback data and selecting either a low-speed search data decoding circuit (401) or high-speed search data decoding circuit (402) in accordance with the search speed so as to input the special-playback data to the selected circuit; said low-speed search data decoding circuit (401), which restores the data recorded in the low-speed search data area of the special-playback recording area on the recording medium (407), back to its original low-bit stream during the low-speed mode; said high-speed search data decoding circuit (402), which restores the data recorded in the high-speed search data area of the special-playback recording area, back to its original low-bit stream during the high-speed mode; and a selector circuit (403) for selecting one of the outputs from the low-speed search data decoding circuit (401) and the high-speed search data decoding circuit (402).

**5.** A digital recording and reproducing apparatus according to claim 3 or 4, wherein the bit-stream input processing circuit (117) has a bit-stream input changing circuit (210) for outputting a sampling signal corresponding to the inputted bit stream so as to enable the inputted bit stream to be processed therein.

**Patentansprüche**

**1.** Digitales Aufzeichnungs- und Wiedergabegerät mit einem Aufzeichnungssystem mit einer Spezialabspieldaten-Erzeugungsschaltung (202), die so ausgebildet ist, dass sie aus einem an einem Eingangsanschluss (116) eingegebenen mit hoher Effizienz codierten Bitstrom einen Bitstrom für normales Abspielen und mindestens zwei Arten von Suchdaten-Bitströmen niedriger Bitrate für spezielles Abspielen erzeugt, und einer Einrichtung, die dafür sorgt, dass die erzeugten Daten auf mehrfach zugeordnete Weise aufgezeichnet werden; und einem Wiedergabesystem mit einer Einrichtung zum Reproduzieren und Decodieren des Bitstroms für normales Abspielen und der mindestens zwei Arten von Suchdaten-Bitströmen, wie sie während des Aufzeichnens erzeugt wurden, wodurch mindestens zwei Arten von Spezialabspiel-Geschwindigkeiten ausgewählt werden können; **dadurch gekennzeichnet, dass** das Aufzeichnungssystem über eine Prioritätswählschaltung (303) zum Bestimmen des Zuordnungsverhältnisses einer vorbestimmten Codemenge zwischen den mindestens zwei Arten von Suchdaten-Bitströmen niedriger Bitrate und eine Steuerschaltung (204) zum Ausgeben eines Steuersignals an die Prioritätswählschaltung (303) zum Steuern des Zuordnungsverhältnisses verfügt.

**2.** Gerät nach Anspruch 1, bei dem das Zuordnungsverhältnis so steuerbar ist, dass ein Aufzeichnungsgebiet zwischen den Suchdaten-Bitströmen niedriger Bitrate gleichmäßig aufgeteilt wird.

**3.** Digitales Aufzeichnungs- und Wiedergabegerät nach einem der vorstehenden Ansprüche, bei dem das Aufzeichnungssystem Folgendes aufweist: einen Videobild-Eingangsanschluss (100); einen Analog-Digital-Wandler (101); einen Bildcodierer (102); einen Codierer (103) für variable Länge; einen Fehlerkorrekturcodierer (104); einen Digitalmodulator (105); einen Aufzeichnungsverstärker (106); einen Wiedergabeverstärker (108); einen Entzerrer (109); einen Digitaldemodulator (110); einen Fehlerkorrektur-Decodierer (111); einen Decodierer (112) für variable Länge; einen Bilddecodierer (113); einen Digital-Analog-Wandler (114); und einen Videoausgangsanschluss (115), und ferner mit:

- einer Bitstrom-Eingabeverarbeitungsschaltung (117) zum Empfangen des mit hoher Effizienz codierten Bitstroms eines digitalen Signals wie eines Fernsehsignals hoher Auflösung oder dergleichen, wobei der Bitstrom auf Grundlage eines vorbestimmten Standards mit hoher Effizienz codiert wurde;
- einer Synchronisationserfassungsschaltung (200) zum Erfassen eines Synchronisiersignalabschnitts aus dem eingegebenen Bitstrom; eine Eingangsschnittstellenschaltung (201) zum Wandeln des eingegebenen Bitstroms in ein Signal mit der Aufzeichnungsrate des digitalen Aufzeichnungs- und Wiedergabegeräts; und einem Mehrfachzuordner (302) zum Zuordnen der erzeugten Suchdaten-Bitströme für spezielles Abspielen zu den Datenauslesepositionen auf einem Aufzeichnungsträger (107), von dem die Daten während speziellen Abspielens ausgelesen werden können, und zum mehrfachen Zuordnen der erzeugten Suchdaten-Bitströme für spezielles Abspielen zum Bitstrom für normales Abspielen, was es ermöglicht, den Bitstrom für normales Abspielen auf einem Normalabspiel-Aufzeichnungsgebiet auf dem Aufzeichnungsträger aufzuzeichnen, und es ermöglicht, die Suchdaten-Bitströme für spezielles Abspielen auf einem Spezialabspiel-Aufzeichnungsgebiet aufzuzeichnen; und wobei das Wiedergabesystem Folgendes aufweist:

- eine Bitstrom-Ausgabeverarbeitungsschaltung (118) im Wiedergabesystem, die Folgendes aufweist: eine Ausgangsschnittstellenschaltung (207) zum Wandeln des im Normalabspiel-Aufzeichnungsgebiet auf dem Aufzeichnungsträger aufgezeichneten Bitstroms für normales Abspielen zum mit hoher Effizienz codierten Bitstrom auf Grundlage des vorbestimmten Standards; einer Spezialabspieldaten-Verarbeitungsschaltung (208) zum Decodieren der mindestens zwei Arten von während des Aufzeichnens erzeugten Suchdaten-Bitströmen; eine Umschaltstufe (209) zum Ausführen eines Umschaltens zwischen dem Normalabspielmodus und dem Spezialabspielmodus; und einen Ausgangsanschluss (119) zum Ausgeben des auf Grundlage des vorbestimmten Standards mit hoher Effizienz codierten Bitstroms, wodurch der auf Grundlage des vorbestimmten Standards mit hoher Effizienz codierte Bitstrom des digitalen Signals aufgezeichnet und abgespielt werden kann und mindestens zwei Arten spezieller Abspielmodi selektiv betrieben werden können.

**4.** Digitales Aufzeichnungs- und Wiedergabegerät nach Anspruch 3, bei dem die mindestens zwei Arten von Suchdaten-Bitströmen niedriger Bitrate zwei Arten von Suchdaten-Bitströmen für niedrige und hohe Geschwindigkeit beinhalten, wobei die Spezialabspieldaten-Erzeugungsschaltung (202) im Aufzeichnungssystem über Folgendes verfügt: die Prioritätswählschaltung (303) zum Bestimmen des Zuordnungsverhältnisses der Codemenge zwischen den zwei Suchdaten-Bitströmen für niedrige und hohe Geschwindigkeit, wenn die zwei Arten von Bitströmen im spezialabspieldaten-Aufzeichnungsgebiet aufgezeichnet sind; eine Niedergeschwindigkeitssuchdaten-Erzeugungsschaltung (300) zum Erzeugen eines Bitstroms niedriger Bitrate für Niedergeschwindigkeitssuchdaten aus dem Bitstrom, dessen Synchronisiersignal in der Synchronisiererfassungsschaltung (200) aufgenommen wurde; und eine Hochgeschwindigkeitssuchdaten-Erzeugungsschaltung (301) zum Erzeugen eines Bitstroms niedriger Bitrate für Hochgeschwindigkeitssuchdaten aus dem Bitstrom, dessen Synchronisiersignal in der Synchronisationserfassungsschaltung (200) aufgenommen wurde; und die Spezialabspieldaten-Verarbeitungsschaltung (208) im Wiedergabesystem Folgendes aufweist: eine Suchgeschwindigkeits-Erkennungsschaltung (400) zum Erkennen der Suchgeschwindigkeit der abgespielten Spezialabspieldaten und zum Auswählen entweder einer Niedergeschwindigkeitssuchdaten-Aufzeichnungsschaltung (401) oder einer Hochgeschwindigkeitssuchdaten-Decodierschaltung (402) entsprechend der Suchgeschwindigkeit, um die Spezialabspieldaten in die ausgewählte Schaltung einzugeben; die Niedergeschwindigkeitssuchdaten-Decodierschaltung (401), die die im Niedergeschwindigkeitssuchdaten-Gebiet des Spezialabspieldaten-Aufzeichnungsgebiet auf dem Aufzeichnungsträger (407) während des Niedergeschwindigkeitsmodus in ihren ursprünglichen Niederbitstrom wiederherstellt; die Hochgeschwindigkeitssuchdaten-Decodierschaltung (402), die die im Hochgeschwindigkeitssuchdaten-Gebiet des Spezialabspieldaten-Aufzeichnungsgebiets aufgezeichneten Daten während des Hochgeschwindigkeitsmodus in ihren ursprünglichen Niederbitstrom wiederherstellt; und eine Selektorschaltung (403) zum Auswählen eines der Ausgangssignale der Niedergeschwindigkeitssuchdaten-Decodierschaltung (401) und der Hochgeschwindigkeitssuchdaten-Decodierschaltung (402).

**5.** Digitales Aufzeichnungs- und Wiedergabegerät nach Anspruch 3 oder 4, bei dem die Bitstrom-Eingangsverarbeitungsschaltung (117) über eine Bitstrom-Eingangswechselschaltung (210) zum Ausgeben eines dem eingegebenen Bitstrom entsprechenden Abtastsignals verfügt, um es zu ermöglichen, den eingegebenen Bitstrom in ihr zu verarbeiten.

## Revendications

**1.** Dispositif d'enregistrement et de reproduction numérique comprenant un système d'enregistrement muni d'un circuit de génération de données de lecture spéciale (202) conçu pour produire, à partir d'un flux binaire codé à haut rendement appliqué à une borne d'entrée (116), un flux binaire destiné à la lecture normale et au moins deux flux binaires de données de recherche à faible débit binaire destinés à une lecture spéciale et un moyen permettant l'enregistrement des données produites selon des modalités d'allocations multiples ; et un système de reproduction comprenant un moyen de reproduction et de décodage du flux binaire pour une lecture normale et les au moins deux types de flux binaires de données de recherche à faible débit binaire qui ont été générés pendant l'enregistrement, permettant ainsi la sélection d'au moins deux types de vitesses de lecture spéciale ; **caractérisé en ce que** le système d'enregistrement comprend un circuit de choix de priorités (303) destiné à déterminer un coefficient d'allocation d'une quantité de code prédéterminée entre les au moins deux types de flux binaires de données de recherche à faible débit binaire, et un circuit de contrôle (204) destiné à générer un signal de contrôle appliqué au circuit de choix de priorités (303) afin de contrôler ledit coefficient d'allocation.

**2.** Dispositif selon la revendication 1, dans lequel le coefficient d'allocation est susceptible d'être contrôlé afin de scinder de manière égale une zone d'enregistrement entre les flux binaires de données de recherche à faible débit binaire.

**3.** Dispositif d'enregistrement et de reproduction numérique selon l'une quelconque des revendications précédentes, dans lequel le système d'enregistrement comprend : une borne d'entrée d'images vidéo (100) ; un convertisseur analogique-numérique (101) ; un codeur d'images (102) ; un codeur à longueur variable (103) ; un codeur à correction d'erreurs (104) ; un modulateur numérique (105) ; un amplificateur d'enregistrement (106) ; un amplificateur de reproduction (108) ; un égaliseur (109) ; un démodulateur numérique (110) ; un décodeur à correction d'erreurs (111) ; un décodeur à longueur variable (112) ; un décodeur d'images (113) ; un convertisseur numérique-analogique (114) ; et une borne de sortie vidéo (115), et comprend en outre :

un circuit de traitement d'entrée de flux binaire (117) destiné à recevoir ledit flux binaire codé à haut rendement d'un signal numérique tel qu'un signal de télévision à haute définition, ou autre signal équivalent, ledit flux binaire ayant été soumis à un codage à haut rendement en fonction d'une norme prédéterminée ; un circuit d'acquisition de synchronisme (200) destiné à lire une partie de signal de synchronisation dans le flux binaire d'entrée (200) ; un circuit d'interface d'entrée (201) destiné à convertir le flux binaire d'entrée en un signal utilisant la fréquence enregistrement du dispositif d'enregistrement et de reproduction numérique ; et un dispositif d'allocations multiples (302) destiné à effectuer l'allocation des flux binaires de données de recherche générés pour une lecture spéciale aux positions d'extraction de données d'un support d'enregistrement (107) dont il est possible d'extraire les données pendant une lecture spéciale et à effectuer l'allocation multiple des flux binaires de données de recherche générés pour une lecture spéciale au flux binaire pour une lecture normale, qui permet l'enregistrement du flux binaire à lecture normale dans une zone d'enregistrement de lecture normale du support d'enregistrement et qui permet l'enregistrement des flux binaires de données de recherche pour une lecture spéciale dans une zone d'enregistrement de lecture spéciale ; et dans lequel le système de reproduction comprend :

un circuit de traitement de génération de flux binaire (118) prévu dans le système de reproduction, qui comprend : un circuit d'interface de sortie (207) destiné à convertir le flux binaire de lecture normale enregistré dans la zone d'enregistrement de lecture normale du support d'enregistrement en flux binaire codé à haut rendement en fonction de la norme prédéterminée ; un circuit de traitement de données de lecture spéciale (208) destiné à décoder les au moins deux types de flux binaires de données de recherche pendant l'enregistrement ; un circuit de permutation (209) destiné à procéder à une permutation entre le mode de lecture normale et le mode de lecture spéciale ; et une borne de sortie (119) destinée à générer le flux binaire codé à haut rendement en fonction de la norme prédéterminée, ce qui permet l'enregistrement et la reproduction du flux binaire codé à haut rendement du signal numérique en fonction de la norme prédéterminée et la mise en oeuvre sélective d'au moins deux types de modes de lecture spéciale.

**4.** Dispositif d'enregistrement et de reproduction numérique selon la revendication 3, dans lequel les au moins deux types de flux binaires de données de recherche à faible débit binaire comprennent deux types de flux binaires de données de recherche pour les vitesses faible et élevée, le circuit de génération de données de lecture spéciale (202) du système d'enregistrement comprend ledit circuit de choix de priorités (303) afin de déterminer le coefficient d'allocation de la quantité de code entre les deux flux binaires de données de recherche pour les vitesses faible et élevée lorsque les deux types de flux binaires sont enregistrés dans la zone d'enregistrement de lecture spéciale ; un circuit de génération de données de recherche à faible vitesse (300) destiné à produire un flux binaire à faible débit binaire pour les données de recherche à faible vitesse à partir du flux binaire dont le signal de synchronisation a été extrait dans le circuit d'acquisition de synchronisme (200) ; et un circuit de génération de données de recherche à vitesse élevée (301) destiné à produire un flux binaire à faible débit binaire pour les données de recherche à vitesse élevée à partir du flux binaire dont le signal de synchronisation a été extrait dans le circuit d'acquisition de synchronisme (200), et le circuit de traitement de données de lecture spéciale (208) du système de reproduction comprend : un circuit d'identification de vitesse de recherche (400) destiné à détecter la vitesse de recherche des données de lecture spéciale reproduites et à sélectionner un circuit de décodage de données de recherche à faible vitesse (401) ou un circuit de décodage de données de recherche à vitesse élevée (402) en fonction de la vitesse de recherche afin d'appliquer les données de lecture spéciale au circuit sélectionné ; ledit circuit de décodage de données de recherche à faible vitesse (401), qui effectue la restauration des données enregistrées dans la zone de données de recherche à faible vitesse de la zone d'enregistrement de lecture spéciale du support d'enregistrement (407) dans son flux binaire à faible vitesse original dans le mode de faible vitesse ; ledit circuit de décodage de données de recherche à vitesse élevée (402), qui effectue la restauration des données enregistrées dans la zone de données de recherche à vitesse élevée de la zone d'enregistrement de lecture spéciale dans son flux binaire à faible vitesse original dans le mode de vitesse élevée ; et un circuit sélecteur (403) destiné à sélectionner une des sorties du circuit de décodage de données de recherche à faible vitesse (401) et du circuit de décodage de données de recherche à vitesse élevée (402).

**5.** Dispositif d'enregistrement et de reproduction numérique selon la revendication 3 ou 4, dans lequel le circuit de traitement d'entrée de flux binaire (117) est muni d'un circuit de changement d'entrée de flux binaire (210) destiné à produire un signal d'échantillonnage correspondant au flux binaire d'entrée afin d'y permettre le traitement du flux binaire d'entrée.

FIG. 1 PRIOR ART

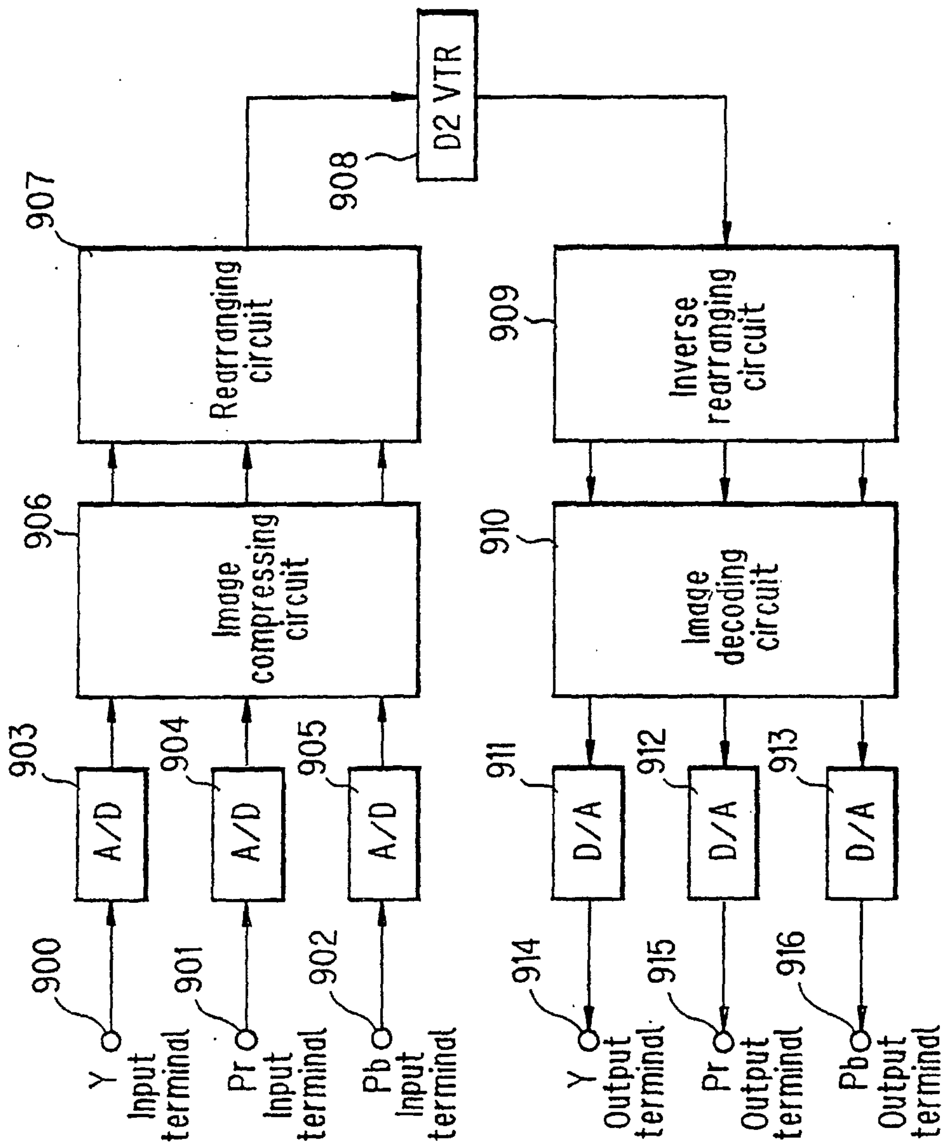

FIG. 2

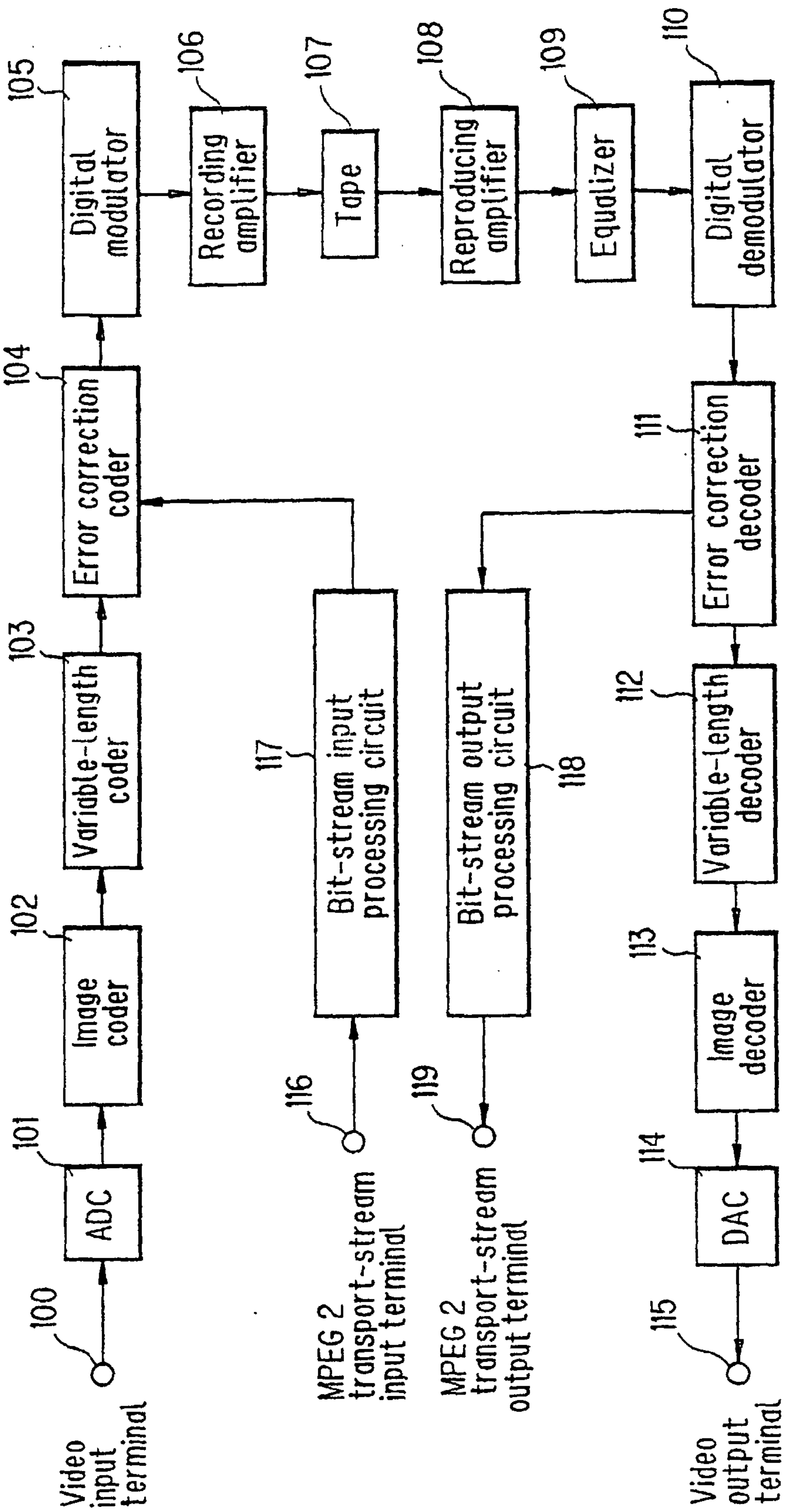

Video input terminal
100
ADC
101
Image coder
102
Variable-length coder
103
Error correction coder
104
Digital modulator
105
Recording amplifier
106
Tape
107
Reproducing amplifier
108
Equalizer
109
Digital demodulator
110
Error correction decoder
111
Variable-length decoder
112
Image decoder
113
DAC
114
Video output terminal
115
MPEG 2 transport-stream input terminal
116
Bit-stream input processing circuit
117
Bit-stream output processing circuit
118
MPEG 2 transport-stream output terminal
119

FIG. 3

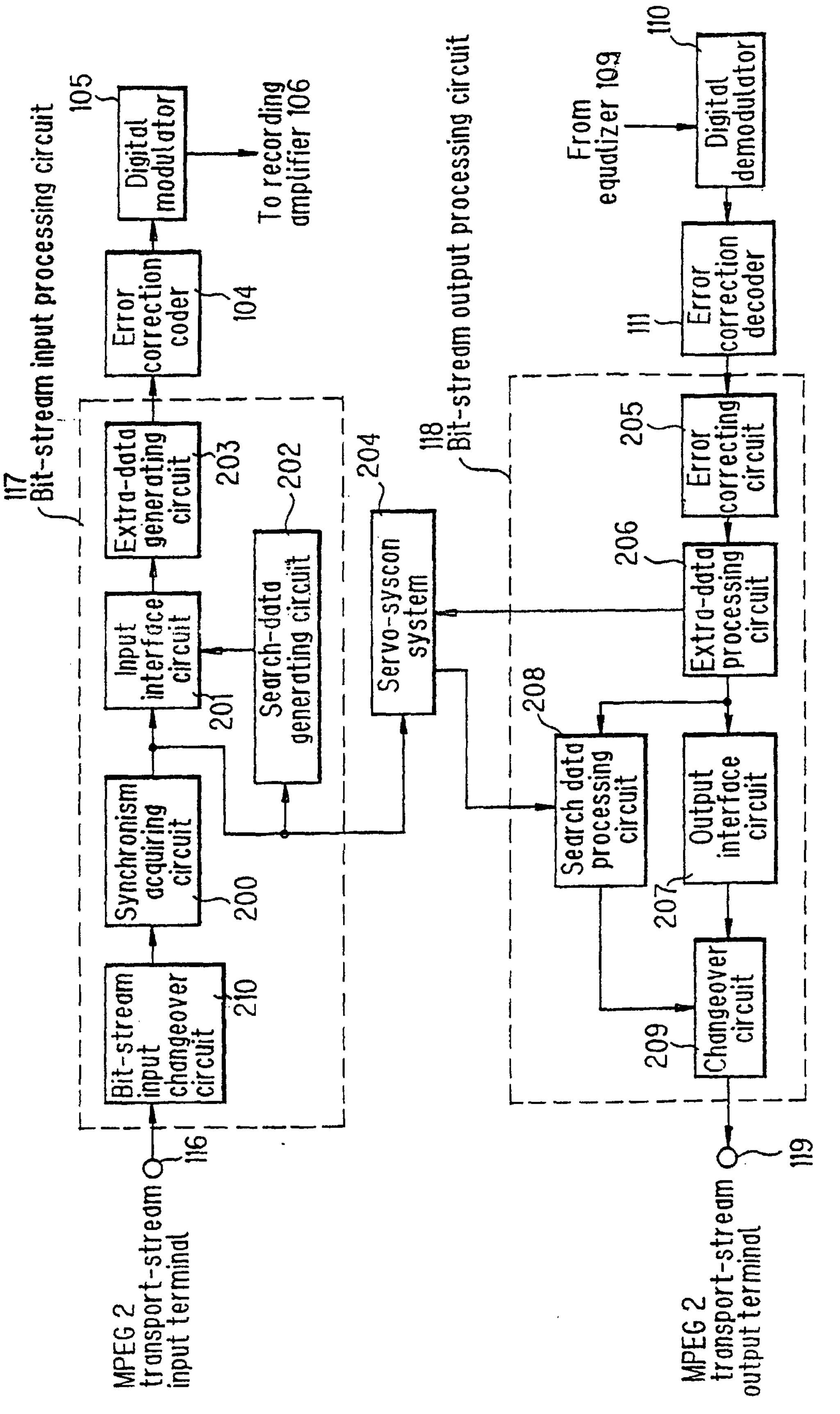
117
Bit-stream input processing circuit
MPEG 2 transport-stream input terminal
116
Bit-stream input changeover circuit
210
Synchronism acquiring circuit
200
Input interface circuit
201
Search-data generating circuit
202
Extra-data generating circuit
203
Error correction coder
104
Digital modulator
105
To recording amplifier 106
Servo-syscon system
204
118
Bit-stream output processing circuit
From equalizer 109
Digital demodulator
110
Error correction decoder
111
Error correcting circuit
205
Extra-data processing circuit
206
Search data processing circuit
208
Output interface circuit
207
Changeover circuit
209
MPEG 2 transport-stream output terminal
119

FIG. 4

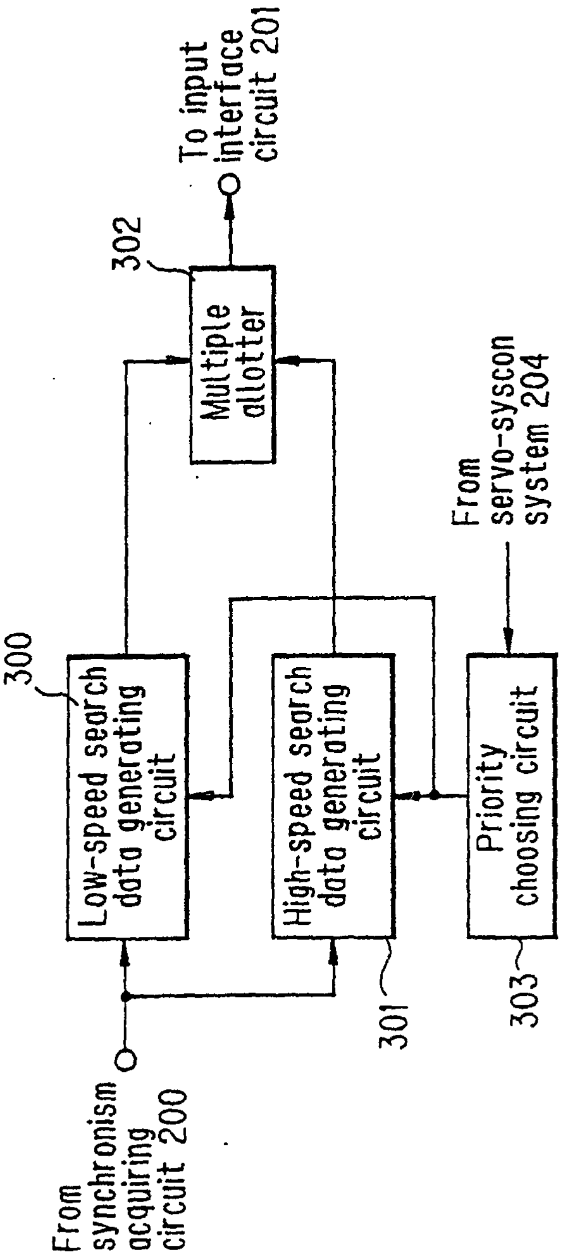
From synchronism acquiring circuit 200
300
Low-speed search data generating circuit
301
High-speed search data generating circuit
303
Priority choosing circuit
From servo-syscon system 204
302
Multiple allotter
To input interface circuit 201

FIG. 5

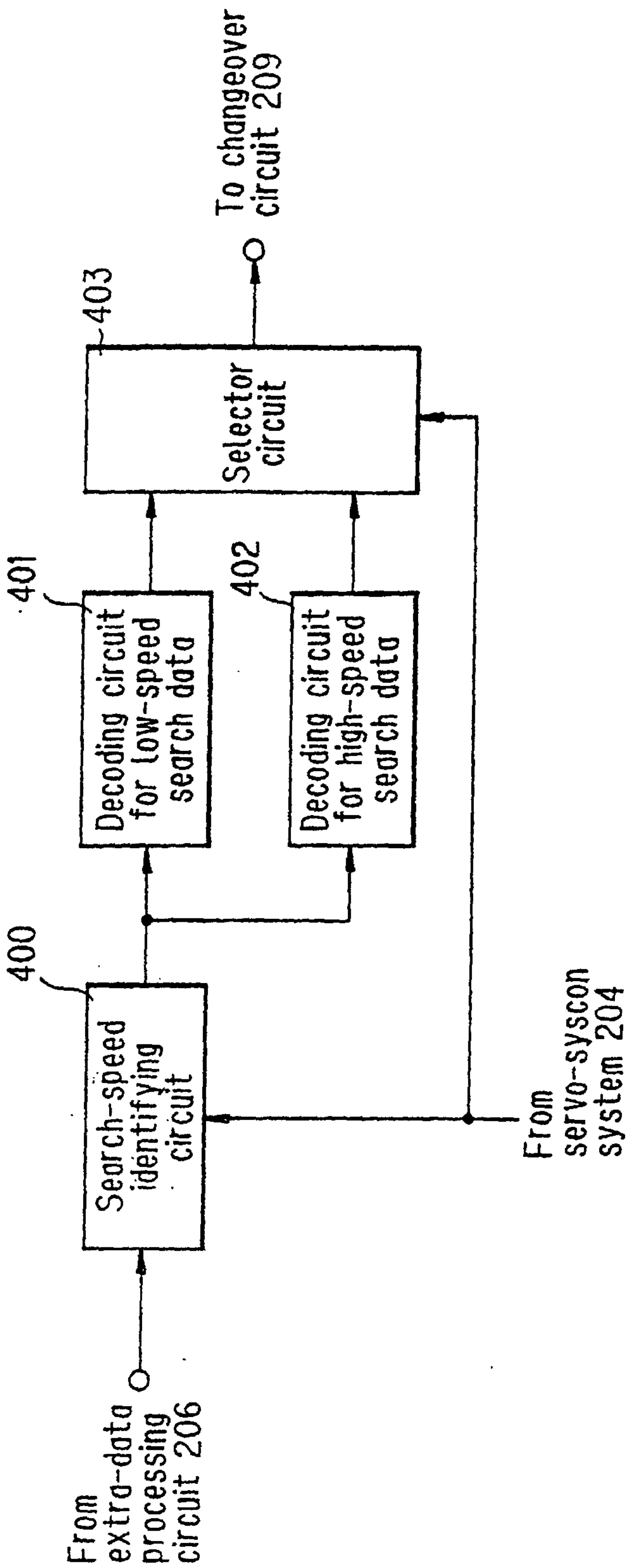
From extra-data processing circuit 206
Search-speed identifying circuit
400
Decoding circuit for low-speed search data
401
Decoding circuit for high-speed search data
402
Selector circuit
403
To changeover circuit 209
From servo-syscon system 204

FIG. 6

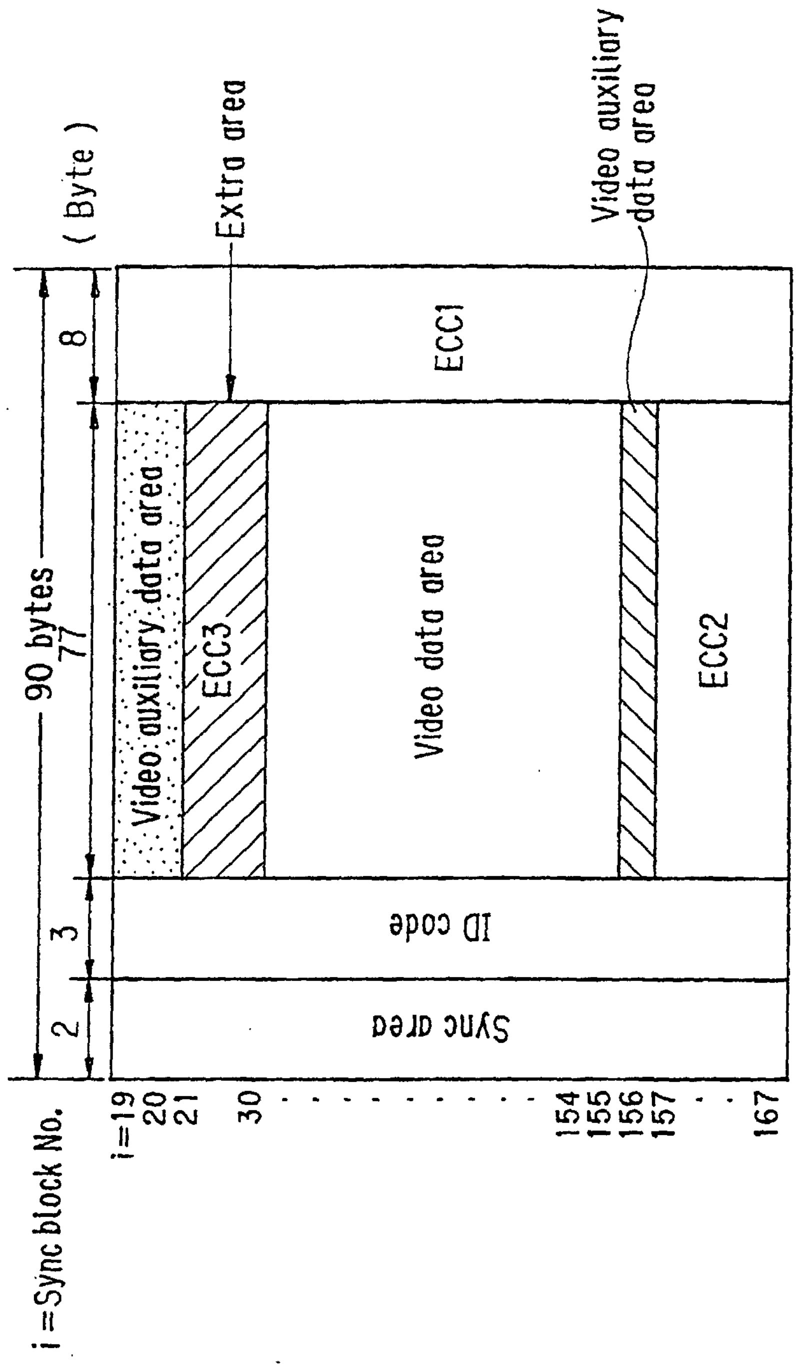

90 bytes
(Byte)
8
77
3
2
Extra area
Video auxiliary data area
ECC1
Video auxiliary data area
ECC3
Video data area
ECC2
ID code
Sync area
i = Sync block No.
i = 19
20
21
30
154
155
156
157
167

FIG. 7

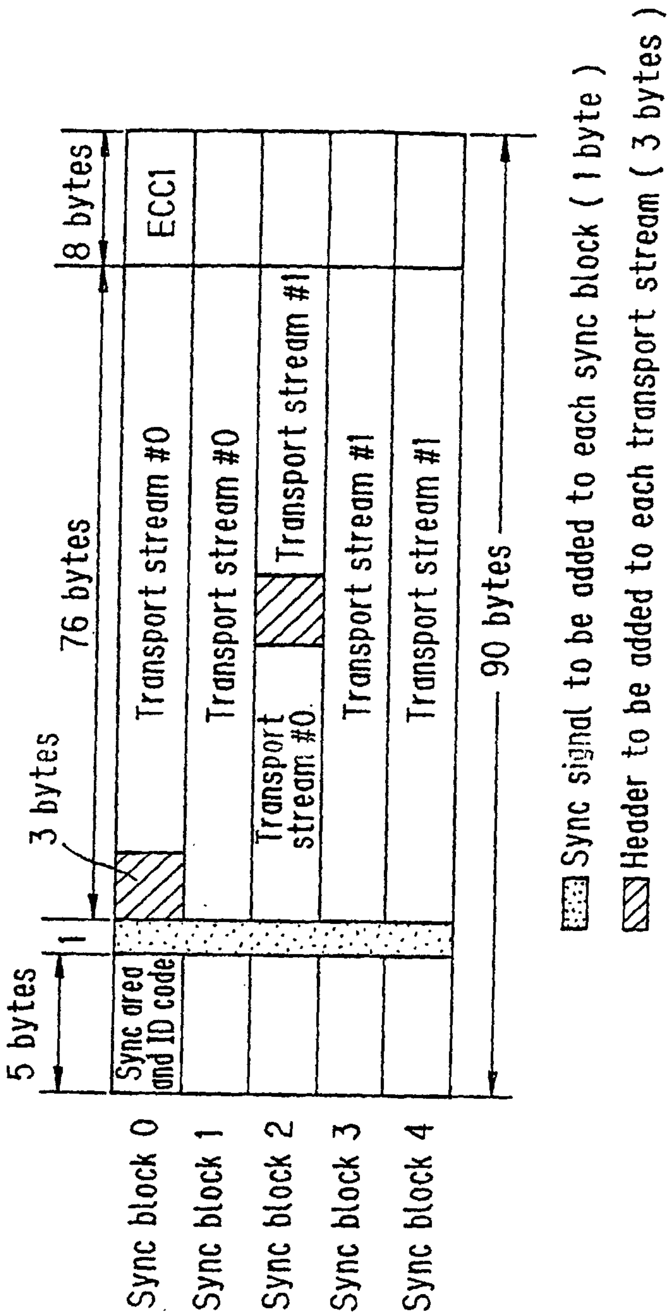

Sync block 0
Sync block 1
Sync block 2
Sync block 3
Sync block 4
5 bytes
1
3 bytes
76 bytes
8 bytes
90 bytes
Sync area and ID code
Transport stream #0
Transport stream #0
Transport stream #0
Transport stream #1
Transport stream #1
Transport stream #1
ECC1
Sync signal to be added to each sync block ( 1 byte )
Header to be added to each transport stream ( 3 bytes )

FIG.8

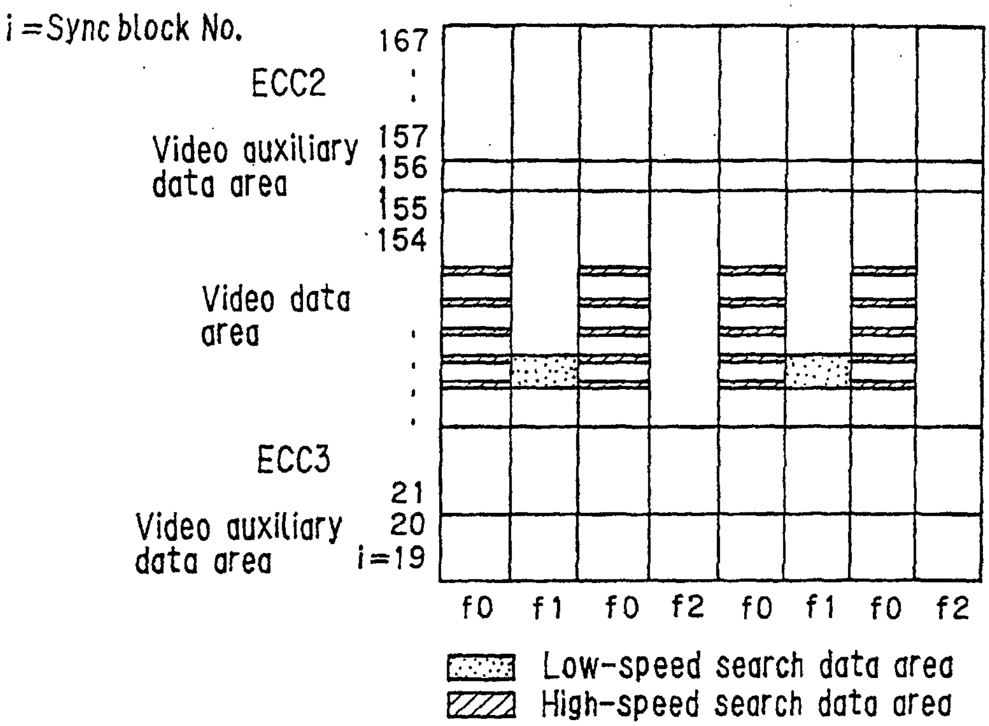
i=Sync block No.
167
ECC2
157
Video auxiliary data area
156
155
154
Video data area
ECC3
21
Video auxiliary data area
20
i=19
f0 f1 f0 f2 f0 f1 f0 f2
Low-speed search data area
High-speed search data area